(19)

Europäisches Patentamt
European Patent Office
Office européen des brevets

(11)  **EP 1 975 778 A1**

(12)  **EUROPEAN PATENT APPLICATION**

(43) Date of publication:
  **01.10.2008  Bulletin 2008/40**

(51) Int Cl.:
  *G06F 7/552* <sup>(2006.01)</sup>   *G01R 19/02* <sup>(2006.01)</sup>

(21) Application number: **07006773.1**

(22) Date of filing: **31.03.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **SONY DEUTSCHLAND GMBH**<br>**10785 Berlin (DE)** | (72) Inventors:<br>• **Nöthlings, Rolf**<br> **70327 Stuttgart (DE)**<br>• **Spalink, Gerd**<br> **70327 Stuttgart (DE)**<br><br>(74) Representative: **Müller - Hoffmann & Partner**<br>**Patentanwälte,**<br>**Innere Wiener Strasse 17**<br>**81667 München (DE)** |

(54)  **Method and digital logic circuit for determining a signal of output samples and corresponding computer program code**

(57)   A method for determining a signal (Y) of output samples (y(t)) of a digital logic circuit (100. 200. 300), each of said output samples (y(t)) corresponding to a respective input sample (x(t)) of a signal (X) of time-varying input samples (x(t)), comprising: inputting said signal (X) of input samples (x(t)) into said digital logic circuit (100, 200, 300), determining an actual output sample (y($t_0$)) for an actual input sample (x($t_0$)) by using an iterative process taking into account a preceding output sample (y($t_0$-T)), which corresponds to an input sample (x($t_0$-T)) preceding in said signal (X) of input samples (x(t)); wherein said output samples (y(t)) approximate a desired processed form of said input samples (x(t)) by using an approximation of the underlying desired process which is realized by said iterative process.

A corresponding digital logic circuit (100, 200, 300) and a computer program code are presented as well.

FIG 1

**Description**

The invention relates to a method of determining a signal of output samples of a digital logic circuit, each of said output samples corresponding to a respective input sample of a signal of time-varying input samples, and a corresponding digital logic circuit. The invention also relates to a corresponding computer program code.

BACKGROUND

Digital real time sample processing (using e.g. Application Specific Integrated Circuits (ASIC) or Digital Sample Processors (DSP)) often confines itself to very simple mathematical operations, as these operations need to be realizable with logic circuits, especially under the constraint of calculation power and circuit size limitation (gate count). Sample processing means for determining output samples from input samples based on algebraic or transcendental mathematical functions are often using look-up tables. While using look-up tables quantization errors may occur, which can be reduced by interpolation. However, there is a need to store a large look-up table and a certain quantization error remains sample by sample. Look-up tables have unequal error distributions, the higher the curvature of the underlying function the bigger the errors.

It is an object of the invention to provide a method and a digital logic circuit for determining a signal of output samples, each of said output samples corresponding to a respective input sample of a signal of time-varying input samples, which method and digital logic circuit are easily realized in digital logic.

The object is achieved in a first aspect by a method for determining a signal of output samples of a digital logic circuit, each of said output samples corresponding to a respective input sample of a signal of time-varying input samples, comprising:

inputting said signal of input samples into said digital logic circuit;
determining an actual output sample for an actual input sample by using an iterative process taking into account a preceding output sample, which corresponds to an input sample preceding in said signal of input samples;
wherein said output samples approximate a desired processed form of said input samples by using an approximation of the underlying desired process which is realized by said iterative process,

In other words a numeric iterative algorithm is used to reduce a complicated mathematical operation to a series of simple iterative operations. In case of a time-varying input sample the iteration sequence is replaced by a time sequence, using the preceding or previous output sample as the iteration start value, i.e. the estimation for the actual determination process.

With a second aspect a digital logic circuit is provided for determining an output sample, corresponding to an input sample of said digital logic circuit, which input sample is one of a signal of time-varying input samples, said digital logic circuit being configured to:

determining an actual output sample for an actual input sample by using an iterative process taking into account a preceding output sample, which corresponds to an input sample preceding in said signal of input samples;
wherein said output samples approximate a desired processed form of said input samples by using an approximation of the underlying desired process which is realized by said iterative process.

With a third aspect a computer program code is provided which, when loaded onto a computer system, executes the method for determining a signal of output samples of a digital logic circuit, each of said output samples corresponding to a respective input sample of a signal of time-varying input samples, said method comprising:

inputting said signal of input samples into said digital logic circuit;
determining an actual output sample for an actual input sample by using an iterative process taking into account a preceding output sample, which corresponds to an input sample preceding in said signal of input samples;
wherein said output samples approximate a desired processed form of said input samples by using an approximation of the underlying desired process which is realized by said iterative process,

BRIEF DESCRIPTION OF THE DRAWINGS

The above and other objects, features and advantages of the present invention will become more apparent from the following description of the exemplary embodiments of the invention taken in conjunction with the accompanying drawings, in which

Fig. I    shows a schematic diagram of an embodiment with one iteration,

Fig. 2    shows an implementation of an embodiment for determining a square root of the input sample,

Fig. 3    shows an implementation of an embodiment for determining a cubic root of the input sample,

Fig. 4    shows a schematic process diagram.

DETAILED DESCRIPTION

Many mathematic functions y=f(x) can be approximated by iterative equations in the form

$$y^{(m+1)} = h(x, y^{(m)})$$

where m is the iteration number index and $h(x, y^{(m)})$ being an approximation of the exact function f(x).

Depending on the convergence properties of the approximation h and the iteration's start or estimated value y(m), the next iteration value y(m+1) is a good approximation of the exact value y after a certain number of iterations.

In the processing of a signal X of digital input samples x(t) iterative approximations of complex functions can be applied, with somewhat simpler mathematic operations.

The number of iterations can be drastically reduced, when the last sample's result (output sample) is taken as the new estimation for the current sample. This saves logic gates and calculation power.

The number of iterations can be reduced to only one, if the input sample is changing very slowly compared to a sample period T. The following approximation is obtained for y(t)=f(x(t)):

$$y(t_0) = h(x(t_0), y(t_0 - T)),$$

where $t_0 - T$ and $t_0$ describe successive points in time of successive samples.

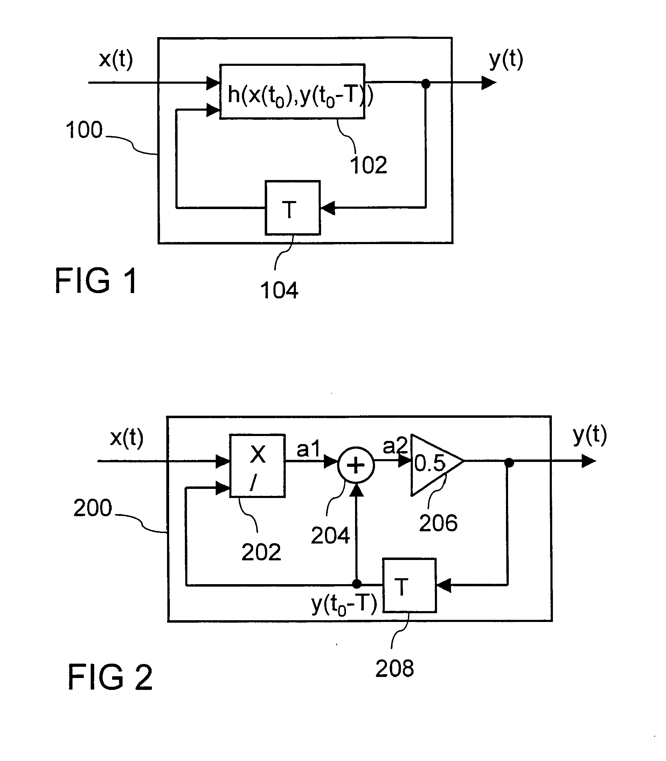

Fig. 1 is showing a system diagram for a one iteration solution. A signal X of input samples x(t) is inputted into a digital logic circuit 100, which comprises a calculation unit 102 and a delay line 104 for one sample period T. The calculation unit 102 derives a signal Y of output samples y(t), each output sample y(t) corresponding to an input sample x(t). An output sample $y(t_0 - T)$, which precedes an actual output sample $y(t_0)$ in said signal Y of output samples y(t) and which corresponds to an input sample $x(t_0 - T)$, which precedes an actual input sample $x(t_0)$ in said signal X of input samples x(t), is inputted into the calculation unit 102 as an intermediate sample or estimation sample, which is graphically depicted via the delay line 104.

After a settling period the result of the iterative mathematics approach becomes very precise, e.g. depending on how fast the input samples x(t) are changing compared to a sample rate, i.e. the highest relative frequency. The sample rate might be the reciprocal of the sample period T. Using a look-up table (with linear interpolation) the average error remains constant over time. Look-up tables have unequal error distributions. The higher the curvature of the underlying function the bigger the errors. The performance of the iterative mathematic approach does not suffer from the characteristic of the underlying function.

The square root function

$$y = \sqrt{x}$$

can be determined using the iterative approximation (Newton's approximation):

$$y^{(m+1)} = \frac{1}{2}(y^{(m)} + \frac{x}{y^{(m)}})$$

In case of a signal X consisting of samples x(t), which vary slowly in time, this iteration can be transferred into the time domain as:

$$y(t_0) = \frac{1}{2}(y(t_0 - T) + \frac{x(t_0)}{y(t_0 - T)})$$

with $y(t_0-T)$ being the output sample preceding the actual output sample $y(t_0)$ (which is to be determined) and $x(t_0)$ being the actual input sample.

In Fig. 2 an implementation of a square root function is depicted. A signal X of input samples x(t) is inputted into a digital logic circuit 200, which comprises a division unit 202, an adder 204, a constant multiplier 206 and a delay line 208. A current input sample $x(t_0)$ is inputted to one input of the division unit 202 and a preceding output sample $y(t_0-T)$ is inputted into a second input of the division unit 202. A first auxiliary sample a 1 is obtained at the output of the division unit 202, the first auxiliary sample al being the input sample divided by the preceding output sample. The output of the division unit 202 is connected to a first input of the adder 204. The first auxiliary sample al is added to the preceding output sample $y(t_0-T)$ in the adder 204, resulting in a second auxiliary sample a2. The output of the adder 204 is connected to an input of the multiplier 206, in which the second auxiliary sample a2 is multiplied with ½. The output of the multiplier 206 outputs the output sample $y(t_0)$ corresponding to the input sample $x(t_0)$. The output sample $y(t_0)$ is coupled back to the second input of the division unit 202 and to the second input of the adder 204 to be used as an intermediate sample or estimation sample for the iteration process of the next input sample $x(t_0+T)$, which is depicted by using a delay line 208.

When inputting the first input sample of said signal X into said digital logic circuit 200 a predetermined first estimation value is used, which might be chosen appropriately to obtain a good first output sample in accordance with the used approximation.

For determining the square root, the gate count is quite low compared to a look-up table implementation for achieving a similar accuracy, especially when an interpolation would be needed in order to get more precise results.

This approach is particular suited for samples which vary slowly compared to their sample rate, as it is the case, e.g. for a circuit as a part of a root mean square (RMS) detector. In such a case the remaining error after a settling period is smaller than the stationary error remaining using a look-up table. Such RMS detector may be used, for instance, in a digital demodulator for analogue television samples.

For the cubic root function

$$y = \sqrt[3]{x}$$

an iterative approximation (Newton's approximation) can also be determined:

$$y(t_0) = \frac{1}{3}(2y(t_0 - T) + \frac{x(t_0)}{y^2(t_0 - T)})$$

, with $y(t_0-T)$ being the output sample preceding the actual output sample $y(t_0)$ (which is to be determined) and $x(t_0)$ being the actual input sample.

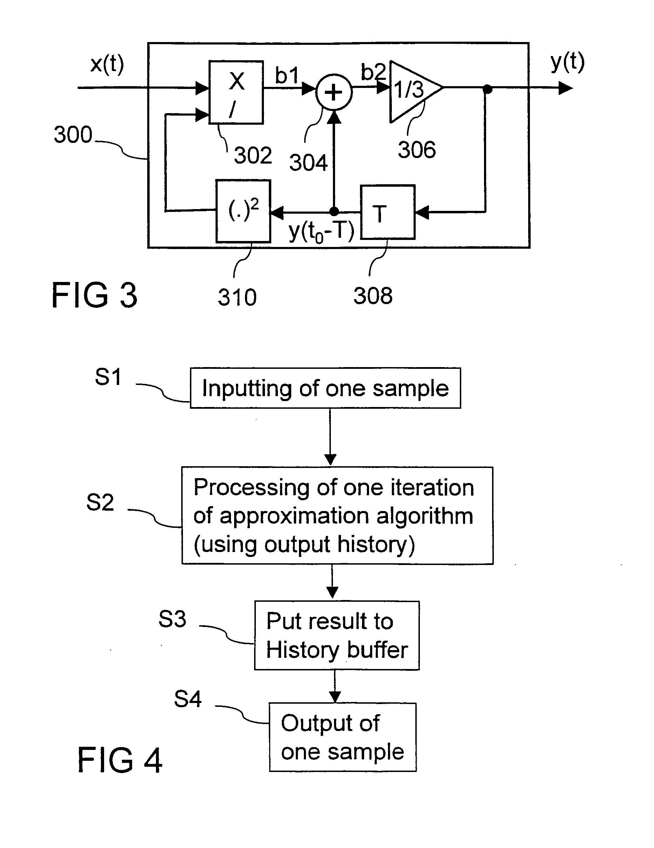

In Fig. 3 an implementation of a digital logic circuit 300 for determining the cubic root function is depicted. A signal X of input samples x(t) is inputted into the digital logic circuit 300, which comprises a second division unit 302, a second adder 304, a second constant multiplier 306, a second delay line 308 and a squaring device 310. A current input sample $x(t_0)$ is inputted to one input of the second division unit 302 and a squared preceding output sample $y^2(t_0-T)$ is

inputted into a second input of the second division unit 302. A third auxiliary sample b1 is obtained at the output of the second division unit 302, the third auxiliary sample b1 being the input sample divided by the squared preceding output sample. The output of the second division unit 302 is connected to a first input of the second adder 304. The third auxiliary sample b1 is added to the preceding output sample $y(t_0-T)$ in the second adder 304, resulting in a fourth auxiliary sample b2. The output of the second adder 304 is connected to an input of the second constant multiplier 306, in which the fourth auxiliary sample b2 is multiplied with 1/3. The output of the second constant multiplier 306 outputs the output sample $y(t_0)$ corresponding to the input sample $x(t_0)$. The output sample $y(t_0)$ is coupled back to the second input of the adder 204 and via said squaring unit 310 to the second input of the division unit 202. The output sample $y(t_0)$ is used as an intermediate sample or estimation sample for the iteration process of the next input sample $x(t_1)$, which is depicted by using a second delay line 308, corresponding to a delay of the sample period T.

In Fig. 4 a schematic flow diagram of the method is depicted. In a first step S 1 one input sample is input into a digital logic circuit. In a second step S2 one iteration of an approximation algorithm for approximating a desired process for this input sample is processed. This iteration is based on an output history, which feeds back a previous output sample. The output history may be found by putting the result of the processing step S2 into a history buffer in step S3. The calculated output sample is output in step S4.

In case the actual output sample $y(t_0)$ is calculated before a next input sample $x(t_0+T)$ is inputted into the digital logic circuit, a real time determination of output samples y(t) is easy to achieve.

The method and the corresponding digital logic circuit may be used as well for other mathematical functions, which may be approximated by corresponding iterative methods, as it is known, e.g. from Bronstein, Semendjajew, "Taschenbuch der Mathematik", Verlag Harri Deutsch (Frankfurt am Main), ISBN 3 87144492 8.

Throughout the embodiments methods and circuits have been shown which uses one iteration to determine the corresponding output sample. However, it is also possible to use more than one iteration to determine corresponding output sample, if one iteration step is not enough to determine an output value which is exact enough for further handling. For instance, two of the proposed digital logic circuits might be connected in series to obtain two iterations. Another possibility is to use an internal clock within the circuit, which is twice as fast as the sample rate, so that in fact two iterations take place within the circuit until the next input sample $x(t_0+T)$ is present at the input of the digital circuit. Higher values for the internal clock of the circuit would result in a corresponding larger number of iterations.

Another possibility is to use preceding output samples that are not directly preceding the actual output sample but e.g. an output sample which has been determined two or three or more times the sample period before the actual output sample.

A method and digital logic circuit are presented to approximate sample processing based on complex mathematical operations. High efficiency is gained by feeding back the functions output samples as the iterations start sample for the next input sample. For slowly changing samples high precision can be achieved with only one implemented iteration.

Reference Symbols

| | |
|---|---|
| X | Signal of input samples |
| Y | Signal of output samples |
| 100, 200, 300 | Digital logic circuit |
| 102 | Calculation Unit |
| 104. 208, 308 | Delay line |
| 202 | Division Unit |
| 204 | Adder |
| 206 | Multiplier |
| 302 | Second Division Unit |
| 304 | Second Adder |
| 306 | Second Multiplier |
| 308 | Second Delay Line |
| 310 | Squaring Device |
| S 1 | First Step |
| S2 | Second Step |
| S3 | Third Step |
| S4 | Fourth Step |
| $x(t_0)$ | Actual input sample |
| $y(t_0)$ | Actual output sample |

| $x(t_0-T)$ | Preceding input sample |
|---|---|
| $y(t_0-T)$ | Preceding output sample |
| $x(t_0+T)$ | Next input sample |
| T | Sample period |

**Claims**

1. Method for determining a signal (Y) of output samples (y(t)) of a digital logic circuit (100, 200. 300), each of said output samples (y(t)) corresponding to a respective input sample (x(t)) of a signal (X) of time-varying input samples (x(t)), comprising:

   inputting said signal (X) of input samples (x(t)) into said digital logic circuit (100, 200, 300);
   determining an actual output sample $(y(t_0))$ for an actual input sample $(x(t_0))$ by using an iterative process taking into account a preceding output sample $(y(t_0-T))$, which corresponds to an input sample $(x(t_0-T))$ preceding in said signal (X) of input samples (x(t)); wherein said output samples (y(t)) approximate a desired processed form of said input samples (x(t)) by using an approximation of the underlying desired process which is realized by said iterative process,

2. Method according to claim 1, wherein
   a Newton approximation is used as said approximation of said underlying desired process.

3. Method according to any of the claims 1 or 2, wherein
   said actual output sample $(y(t_0))$ is determined by using only one iteration step of said iterative process.

4. Method according to any of claims 1 to 3, wherein
   a preceding output sample $(y(t_0-T)$ corresponding to the input sample $(x(t_0-T))$ directly preceding said actual input sample $(x(t_0))$ in said signal (X) is taken into account.

5. Method according to any of the claims 1 to 4, wherein:

   said actual input sample $(x(t_0))$ and said preceding output sample $(y(t_0-T))$ are inputted into a division unit (202) of said digital logic circuit (200), resulting in a first auxiliary sample (a1) being said actual input sample $(x(t_0))$ divided by said preceding output sample $(y(t_0-T))$;
   said first auxiliary sample (a1) and said preceding output sample $(y(t_0-T))$ are inputted into an adder (204) of said digital logic circuit (200), resulting in a second auxiliary sample (a2), being the sum of said first auxiliary sample (a1) and said preceding output sample $(y(t_0-T))$; and
   said second auxiliary sample (a2) is inputted into a multiplier (206),

   wherein said second auxiliary sample (a2) is multiplied by 0.5, resulting in said actual output sample $(y(t_0))$.

6. Method according to any of the claims 1 to 4, wherein:

   said actual input sample $(x(t_0))$ and a squared preceding output sample $(y^2(t_0-T))$ are inputted into a division unit (302) of said digital logic circuit (300), resulting in a third auxiliary sample (b1) being said actual input sample $(x(t_0))$ divided by said squared preceding output sample $(y^2 (t_0-T))$;
   said third auxiliary sample (b1) and said preceding output sample $(y(t_0-T))$ are inputted into an adder (304) of said digital logic circuit (300). resulting in a fourth auxiliary sample (b2), being the sum of said third auxiliary sample (b1) and said preceding output sample $(y(t_0-T))$; and
   said fourth auxiliary sample (b2) is input into a multiplier (306), wherein said second auxiliary sample (b2) is multiplied by 1/3, resulting in said actual output sample $(y(t_0))$.

7. Digital logic circuit (100, 200, 300) for determining a signal (Y) of output samples (y(t)), each of said output samples (y(t)) corresponding to a respective input sample (x(t)) of a signal (X) of time-varying input samples (x(t)), said digital logic circuit (100. 200. 300) being configured to:

   determining an actual output sample $(y(t_0))$ for an actual input sample $(x(t_0))$ by using an iterative process taking into account a preceding output sample $(y(t_0-T))$, which corresponds to an input sample $(x(t_0-T))$ preceding in

said signal X of input samples (x(t));
wherein said output samples (y(t)) approximate a desired processed form of said input samples (x(t)) by using an approximation of the underlying desired process which is realized by said iterative process.

8. Digital logic circuit (100, 200, 300) according to claim 7, wherein a Newton approximation is used as said approximation of said desired processed form.

9. Digital logic circuit (100. 200, 300) according to any of claims 7 or 8, being further configured to:

   determining said actual output sample ($y(t_0)$) using only one iteration step of said iterative process.

10. Digital logic circuit (100. 200, 300) according to any of claims 7 to 9, being further configured to:

   determining said actual output sample ($y(t_0)$) by taking into account a preceding output sample ($y(t_0-T)$) corresponding to the input sample ($x(t_0-T)$) directly preceding in said signal (X) of input samples (x(t)).

11. Digital logic circuit (200) according to any of the claims 7 to 10, further comprising:

   a division unit (202), an adder (204) and a multiplier (206), a first input of said division unit (202) being connected to an input of said digital logic circuit (200), an output of said division unit (202) being connected to a first input of said adder (204), an output of said adder (204) being connected to an input of said multiplier (206), an output of said multiplier (206) being connected to an output of said digital logic circuit (200) and to an input of a delay line (208), an output of said delay line (208) being connected to a second input of said division unit (202) and to a second input of said adder (204).

12. Digital logic circuit (300) according to any of the claims 7 to 10, further comprising:

   a division unit (302), an adder (304), a multiplier (306) and a squaring device (310), a first input of said division unit (302) being connected to an input of said digital logic circuit (300), an output of said division unit (302) being connected to a first input of said adder (304), an output of said adder (304) being connected to an input of said multiplier (306), an output of said multiplier (306) being connected to an output of said digital logic circuit (300) and to an input of a delay line (308), an output of said delay line (308) being connected to an input of said squaring device (310) and to a second input of said adder (304), an output of said squaring device (310) being connected to a second input of said division unit (302).

13. Computer program code, which, when loaded onto a computer system, executes the method according to any of the claims 1 to 6.

FIG 1

FIG 2

x(t) → [X /] b1 → (+) b2 → [1/3] → y(t)

300    302    304    306

(.)²    y(t₀-T)    T

**FIG 3**    310    308

S1 — | Inputting of one sample |

S2 — | Processing of one iteration of approximation algorithm (using output history) |

S3 — | Put result to History buffer |

S4 — | Output of one sample |

**FIG 4**

European Patent
Office

**EUROPEAN SEARCH REPORT**

Application Number

EP 07 00 6773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/101228 A1 (VIERTHALER MATTHIAS [DE]) 1 August 2002 (2002-08-01)<br>* abstract *<br>* page 1, paragraph 1 - paragraph 14 *<br>* page 3, paragraph 49 - paragraph 52 *<br>* page 3, paragraph 56 - page 4, paragraph 62 *<br>* figures 1,2 * | 1-12 | INV.<br>G06F7/552<br>G01R19/02 |
| X | US 2004/003015 A1 (MANOR YONATAN [IL] ET AL) 1 January 2004 (2004-01-01)<br>* abstract *<br>* page 2, paragraph 15 - page 3, paragraph 45 *<br>* figures 1-3 * | 1-12 | |
| A | US 4 757 467 A (DIETERICH CHARLES B [US] ET AL) 12 July 1988 (1988-07-12)<br>* abstract *<br>* figure 2 * | 1-12 | |
| | | | TECHNICAL FIELDS SEARCHED (IPC)<br><br>G06F<br>G01R |

The present search report has been drawn up for all claims

| Place of search | Date of completion of the search | Examiner |
|---|---|---|
| Munich | 25 October 2007 | Post, Katharina |

EPO FORM 1503 03.82 (P04C01)

## ANNEX TO THE EUROPEAN SEARCH REPORT
## ON EUROPEAN PATENT APPLICATION NO.

EP 07 00 6773

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2007

| Patent document cited in search report | | Publication date | Patent family member(s) | | Publication date |
|---|---|---|---|---|---|
| US 2002101228 | A1 | 01-08-2002 | NONE | | |
| US 2004003015 | A1 | 01-01-2004 | US | 2006136538 A1 | 22-06-2006 |
| US 4757467 | A | 12-07-1988 | DE | 3716197 A1 | 19-11-1987 |
| | | | FR | 2598833 A1 | 20-11-1987 |
| | | | GB | 2190522 A | 18-11-1987 |
| | | | JP | 2762080 B2 | 04-06-1998 |
| | | | JP | 62274336 A | 28-11-1987 |
| | | | SG | 28993 G | 21-05-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRONSTEIN ; SEMENDJAJEW.** Taschenbuch der Mathematik. Verlag Harri Deutsch